# EUROPEAN PATENT SPECIFICATION

(11) **EP 1 836 099 B1**
(45) Date of publication and mention of the grant of the patent: **28.07.2010**
(21) Application number: 05850938.1
(22) Date of filing: 19.12.2005
(51) Int. Cl.: B65D 75/26, B65D 85/00, B32B 27/32

(54) **Mould for packaging bitumen**
Form zum Verpacken von Bitumen
Moule pour le conditionnement de bitume

(30) Priority: 20.12.2004 IN MU13652004
(43) Date of publication of application: 26.09.2007
(73) Proprietor: Bharat Petroleum Corporation Limited, Mumbai 400 002 MAH (IN)
(72) Inventor: THORAT, Tushar, Sudhakar, Bharat Petroleum Corporation Limited, Mumbai 400 002, Maharashtra (IN); UPADHYE, Abhijit, Suresh, Bharat Petroleum Corporation Limited, Mumbai 400 002, Maharashtra (IN); RAWAT, Jaya, Bharat Petroleum Corporation Limited, Mumbai 400 002, Maharashtra (IN); MAHESHWARI, Sonal, Bharat Petroleum Corporation Limited, Mumbai 400 002, Maharashtra (IN); CHOUDARY, Nettem, Venkataswarlu, Bharat Petroleum Corporation Limited, Mumbai 400 002, Maharashtra (IN); SIDDIQUI, Mohammad, Amir, Bharat Petroleum Corporation Limited, Mumbai 400 002, Maharashtra (IN)
(74) Representative: Snodin, Michael D.
(86) International application number: PCT/IN2005/000420
(87) International publication number: WO 2006/067805

(56) References cited:
- US-A- 3 366 233
- US-A- 3 564 808
- US-A- 4 450 962
- US-A- 5 452 800

## Description

### Field of the Invention

The present invention relates to a mould for packing paving bitumen binder enclosed within a multilayered polymer film encasement. Methods of packaging the paving bitumen binder compositions for storage and/or shipping from the refinery site where such bitumen binder products are produced and transported and improved paving bitumen compositions are also described.

### Background of the invention and Prior Art

Bitumen is a very versatile construction material, which has been used for thousands of years (Reference: J. Read and D. Whiteoak, "The Shell Bitumen Hand Book", Fifth Ed., Shell Bitumen, 2003, p2). World market for bitumen in 2003-04 was 130 millions t/year. The demand in India and USA for bitumen binder products in 2003-04 was 3.2 and 38.0 million t/year respectively. Though bitumen binder find a variety of applications, about 80 to 90% are used in pavements and remaining in roofing, waterproofing and for other applications.

For most part bitumen binder has been produced in oil refineries from a variety of specific crudes. The largest portion of paving bitumen compositions are the residual fractions (as vacuum residues with the cut point usually between 425°C and 580°C) derived from such crudes as Mexican, Venezuelan, Arabian Heavy, Kuwait, and Iraq. The bitumen compositions are produced at refinery in molten condition and pumped through steam traced lines at temperatures sufficiently high so that the pumps can handle the molten materials. Such materials are usually shipped to the user site by tankers and in metal drums. When bitumen is shipped in tankers, the tankers are equipped with internal heating coils and the tanks can also be insulated so that it is easy to discharge the bitumen in liquid form from its shipping containers. As most uses of bitumen require elevated temperatures for applications, bitumen binder when transported by tankers needs to be maintained at elevated temperatures till its final application. When bitumen is shipped in metal drums, the drums need to be heated to elevated temperatures to bring it to molten state for actual applications.

There are disadvantages in both modes of shipping explained above. When shipped in tankers, expensive tankers dedicated for bitumen product shipping are required and significant amount of energy in the form of heat must be spent in order to maintain the bitumen in a fluid state. Also, the properties of bitumen can be adversely affected by prolonged storage at elevated temperatures. Transportation by drums has the following disadvantages. The drums need to be heated to elevated temperatures to convert the bitumen to molten state before loading into hot mixer for converting into hot mix concrete. Inherent stickiness of bitumen binder makes it difficult to recover all the bitumen binder in the drum and about 2% of the bitumen is lost. It is also difficult to avoid spillage while trying to use the hot molten bitumen from the drum. Drums are generally used only once and disposal of empty drums is not eco-friendly and expensive metal (usually steel) is lost. On storage the drums get rusted and bitumen can leak resulting in cleaning problem. Bitumen may also get deteriorated as it gets exposed to atmosphere. Handling of drums, generally each weighing about 160-200 Kg, is also difficult.

Pavements can be made with bitumen concretes, which are dust-free, smooth and which offer the strength required for modem automobile and heavy truck traffic. Bitumen concrete is generally made by pumping the hot (fluid) bitumen binder into a mixing device where it is brought into contact with hot aggregate (sand and gravel or crushed stone) particles in a turbulent mixing environment. The fluid bitumen, which remains fluid due to the aggregate temperature, coats the aggregate particles. This material known as hot mix bitumen concrete is used as paving material. It is then spread uniformly by a layering machine or paver over the intended surface being paved, and compacted to form a dense layer. When the bitumen concrete cools, bitumen returns to a viscous semi-solid material which functions as a binder for the aggregates. The resultant pavement can then support loads.

Bitumen concrete pavements can be made to be very smooth which offers outstanding frictional resistance for vehicles operating thereon. Such bitumen concrete pavement can also be repaired easily by adding additional hot bitumen concrete to holes and other types of defects, which develop in the surface.

Though bitumen concrete offers many benefits as a paving material, there are certain problems associated with it. One major problem encountered with bitumen concrete pavements is the loss of the adhesive bond between the aggregate surface and the bitumen. This breaking of the adhesive bond between the bitumen and the aggregate surface is known as "stripping". The stripping of asphalt binder from aggregate surfaces results in shorter pavement life and lot of expenditure on maintenance of bitumen pavements each year. Reduction of stripping tendency is of great interest when trying to improve conditions of road and lowering the maintenance costs. The manner in which viscosity of bitumen changes with temperature can significantly affect the behavior of the pavement made with that bitumen. At high service temperatures, such as those experienced on hot summer days, due to low viscosity, bitumen concrete can experience rutting and shoving. Under such conditions, bitumen cannot bind the aggregates together well enough to support loads without permanent deformation. This permanent deformation forms a rut in the pavement at the loading point (wheel path). On the other hand, at low service temperatures, such as those experienced during cold winter nights, bitumen concrete can experience low temperature cracking.

Over the years, different methods have been developed to reduce stripping tendencies. For example, amines and lime are known to act as anti-stripping agents and are frequently applied to the surface of the aggregate prior to mixing it with the bitumen in making hot mix bitumen concrete. U.S. Patent No. 5,219,901 discloses a method for reducing stripping tendencies which involves coating the aggregates with a thin continuous film of a water-insoluble high molecular weight organic polymer, such as an acrylic polymer or a styrene-acrylic polymer.

Many polymers have been added to bitumen binder in an attempt to change the viscosity-temperature relationship of asphalt to preclude having too high or too low bitumen viscosity in the operating temperature range for a particular bitumen use. The polymers used to modify the asphalt viscosity-temperature relationship can generally be classified as thermoplastics, elastomers (rubbers) or polymers designed to have some properties of both.

To be effective, polymers and/or chemicals must be dispersed uniformly throughout the asphalt. Many of these polymers and chemicals will degrade, decompose or experience a reduction in effectiveness with prolonged storage in hot bitumen. The degradation process depends on time and temperature. The higher the temperature of the bitumen polymer/chemical blend, the faster is the degradation. Reducing the temperature to ambient, will eliminate or greatly retard degradation. Further, some polymers and chemicals will separate from the bitumen binder without constant agitation of the fluid blend. As the temperature is decreased to ambient, the resulting increase in the viscosity of the blend leads to reduction in separation (Ref. U.S. Patent No. 5,331,028).

US 5,452,800 discloses a mould for packing asphalt in a polymer encasement. However, the mould of this document does not comprise movable walls having locking means.

There is disclosed a package for packing bitumen binders for easy handling, storing and transporting of bitumen binder wherein no removal of packaging is required before its use at job site.

There is disclosed a package having a polymer film, which is fully compatible with bitumen and melts to form homogeneous mass under the conditions of ultimate use.

There is disclosed packaging for bitumen, which is fully incorporated into the bitumen under the conditions of ultimate use and forms a homogeneous mass so as to modify bitumen to improve the properties of paving bitumen.

There is disclosed a secondary package to improve ease of handling and provide additional strength.

There is disclosed a secondary package having film which melts and gets incorporated into molten paving bitumen to improve its properties.

There is disclosed a complete system and method for packaging hot molten bitumen and other bitumen like materials, cooling and sealing which can be easily handled, shipped and stored without degrading the quality of bitumen.

### SUMMARY OF THE INVENTION

There is disclosed that molten bitumen can be packed at high temperature using polymer bag formed from a multilayered film, each layer consisting of polypropylene or polyethylene or other suitable polymers. The bitumen packs thus formed are easy to handle and the polymer packaging material used for packaging bitumen fully melts and gets incorporated into bitumen.

There is disclosed a bitumen package comprising of paving bitumen binder having a softening point in the range of 30-65°C enclosed within a multilayered polymer film encasement, each layer being a thin flexible continuous self-sustaining polymer film, such that upon melting, the polymer becomes homogeneous with the paving bitumen binder contained therein.

In a preferred feature, the weight of the paving bitumen binder package is in the range of 0.1 to 100kg, preferably, in the range of 1 to 50kg.

In another preferred feature, the multilayer polymer encasement melts in the temperature range of 140 to 280°C, preferably, in the temperature range of 150 to 200°C.

In another preferred feature, the multilayered encasement is a three layered polymer bag, all the layers being polyethylene or polypropylene or n In another preferred feature, the multilayered encasement is a three layered polymer bag, the inner layer being polypropylene and the outer two layers being polyethylene.

In another preferred feature, the multilayered encasement is a three layered polymer bag, the inner layer and one outer layer which is in contact with bitumen binder being polypropylene and the other outer layer which is not in contact with bitumen being polyethylene.

In another preferred feature, the multilayered encasement is a three layered polymer bag, the inner layer and one outer layer which is not in contact with bitumen binder being polypropylene and the other out layer which is in contact with bitumen being polyethylene.

In another preferred feature, the multilayer polymer encasement forms 0.5 to 10 wt% of the total package the remaining being paving bitumen binder.

In another preferred feature, the polymer encasement when forming more than 2 wt% of the total package, upon melting the polymer becomes homogeneous, gets incorporated with paving bitumen binder and improves the properties of the binder significantly.

In another preferred feature, there is disclosed a method of packing bitumen wherein bitumen binder having softening point in the range of 30-65°C, is filled in a multilayered polymer encasement, each layer being a thin flexible continuous self-sustaining polymer film, upon melting the polymer becomes homogeneous with the paving bitumen binder contained therein.

Preferably, the multilayered polymer encasement is a preformed bag sealed from all sides except from top into which hot molten bitumen is filled and heat sealed at the top.

Preferably, the polymer encasement is supported by a perforated metal mould during filling and cooling.

In another preferred feature, the multilayered polymer encasement is a bag sealed from all sides and formed *in-situ* from a multilayered polymer film in a filling machine into which hot molten bitumen is filled and hot sealed.

In another preferred feature, during filling, the molten bitumen is maintained at temperatures below 140°C, preferably below 120°C.

In another preferred feature, the multilayered polymer encasement along with the bitumen is cooled during filling by immersing in cold fluid.

In another preferred feature, the multilayered polymer encasement along with the bitumen inside is cooled during filling by spraying cold fluid.

In another preferred feature, the cold fluid is maintained at a temperature below 30°C and preferably, at below 10°C.

In another preferred feature, the weight of the bitumen binder package is in the range of 0.1 to 100kg, preferably in the range of 1 to 50kg.

In another preferred feature, the multilayer polymer encasement melts in the temperature range of 140 to 280 °C, preferably in the temperature range of 150 to 200 °C.

The present invention provides a mould for packing bitumen according to claim 1.

Preferably, the side walls are perforated.

In a preferred embodiment, both the side walls are hingedly mounted on said bottom wall.

In another preferred embodiment, one side wall is hingedly mounted on said bottom wall while the other wall is fixedly mounted on said bottom wall.

In another preferred embodiment, the locking means comprise a hook and eye mechanism.

### Brief description of the accompanying drawings

The present invention will now be described with reference to the accompanying drawings in which:

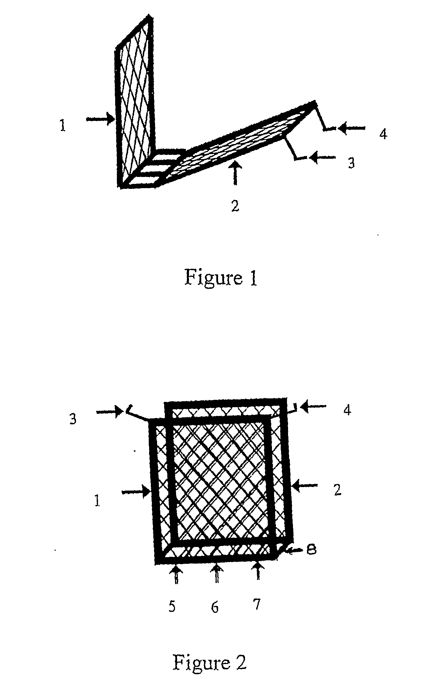

Fig. 1: shows the mould being assembled
Fig. 2 shows the mould being assembled with Hook & Eye mechanism in an open condition;
Fig. 3 :shows bags used for filling bitumen;

### DETAILED DESCRIPTION OF THE INVENTION

The packaging consists of (a) polymer film or sheet either in the form of preformed bag sealed on three sides or a tube sealed at the bottom (pouch), (b) filling of hot paving grade bitumen binder having softening point of about 30-65°C and PEN (penetration at 25°C) of about 20-250 into the polymer bag/pouch, (c) sealing and cooling the bag with its contents which can then be stacked, shipped and used at the user site without removing the packing. The package can be manufactured by any suitable method.

The polymer bag/pouch or tube is made of polymer film which is made from any polymeric material having sufficient heat resistance i.e. does not melt at least up to 90°C, preferably up to 120°C, has enough mechanical strength (Dart Impact Strength > 900 gm as measured by test method IS:2508) and melts in the temperature range of 140°C to 280°C, preferably in the temperature range of 150-200°C. The preferred multilayer film is made, preferably two or three layers. The film thickness can range from 50 to 500 µm, preferred range between 90 to 450 µm. The preferred polymeric materials are polypropylene, polyethylene and copolymers of ethylene, propylene, nylons, etc. The polymeric materials, which can be made into film form and having the desired properties as described earlier can also be used. Different layers can be made from different polymeric materials. For example in a three layered film the outer layers can be made from polyethylene and the inner core can be made from polypropylene.

The preferred film for packaging bitumen binders should have the following properties:
- Temperature susceptibility
- impact performance
- Flexibility and softness
- Compatibility with bitumen binder
- Rigidity and Creep resistance
- Sealing through contaminant capability
- Tear resistance
- Melts at the temperature at which bitumen is converted to molten state at end user application

Monolayer polymer films lack some of the above-mentioned properties. The purpose is that a multilayered film, preferably three layered film with suitable polymeric material for each layer provides desired properties for the film. For example, when a three layered film is made from polypropylene, polyethylene, nylon etc. Polypropylene and nylon provides rigidity, temperature performance, mechanical strength, puncture and impact resistance, while polyethylene gives excellent sealing capability and softness.

Some of the compositions of three layered film using polyethylene and polypropylene which give desired properties are polyethylene in the outer layers and propylene in the inner core. The weight ratios could be I : m : n where in 1, m, n vary from 0 to 100%.

### Manual method of bitumen packaging

Bulk bitumen was first melted and maintained at a temperature range of about below 140°C, preferably below 120°C in a suitable container.

Metallic mould in rectangular box shape having three walls made of perforated sheets for fast heat transfer was designed and fabricated. The three rigid rectangular walls (1,2,8) which form a mould are placed in such a way that one is at the bottom (8) and two are vertical (1, 2) and parallel to each other. In the preferred embodiment shown, one of the vertical walls (1) is welded to the horizontal bottom wall (8) and the other vertical wall (2) is fixed to the bottom wall (8) with hinges (5,6,7) for flexibility. The hinges (5,6,7) allow the flexible wall (2) to freely rotate along the axis of the hinges (Figure - 1 and 2). The two vertical walls (1,2) can be held together in parallel with the help of hook and eye mechanism (3,4). The surfaces and corners, which get in contact with film encasement are made smooth (devoid of pointed and sharp edges).

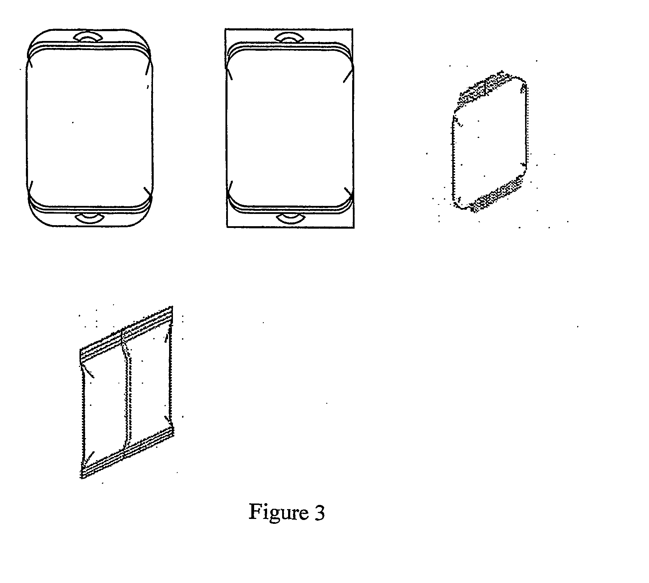

Prefabricated empty polymer bags as shown in Figure 3 can be placed in the mould and firmly held in the mould with the help of suitable fixture such as clamp. The mould is then placed in a coolant tank, which is maintained at a temperature below 30°C, preferably below 10°C.

Required quantity of molten bitumen heated earlier is then poured into the bag from the top opening with the help of a funnel. The filled bag along with mould is left in the water tank for more than 2 minutes so as to cool it below 70 °C, preferably below 50 °C. The sealed bag is then placed on pallet which can be further moved for the stacking and storage.

### Automatic Method of bitumen packaging

In an automatic machine, polymer film in the form of either sheet or cylinder is continuously fed to the machine where the film is sealed in such a way that a bag is formed having opening at the top. Desired quantity of hot bitumen binder in molten state maintained at a temperature in the range of 40 to 140°C, preferably, in the range of 70 to 120°C is filled into the polymer bag. The desired quantity of bitumen filling can be achieved either by measurement and control of volume or mass. The filled bag is then sealed at the top and separated from the rest of the film by cutting above the seal. When hot bitumen binder is filled in the polymer bag, the bag may get damaged/punctured/deformed due to high temperature. To avoid such damage to the film the bag is cooled from outside either by immersing the bag in a cold fluid such as water or by spraying cold fluid such as water or vapor or gas. The temperature of the fluid used for cooling is maintained below 30°C, preferably below 10°C. The sealed bag containing bitumen then carried in a conveyer that is submerged in a cold fluid maintained at temperature below 30°C, preferably below 10°C. The bag remains in the conveyer for a period of more than 2 minutes so as to cool the hot bitumen binder contained in the polymer bag to below 70°C, preferably to below 50°C.

Alternatively, during filling and sealing damage to the film/bag can also be prevented by supporting the bag using a specially designed mould/case and cooling it. The mould was designed so as to provide enough exposure to bag for fast heat transfer. The mould is so designed that it automatically opens from front after filling, sealing and cutting is complete. Right mould dimensions are selected so as to fit the bag/pouch/tube well. The mould is fixed bellow bitumen filling point. After filling the bag with bitumen and sealing front side of the mould is automatically opened so as to allow the bag to fall out of the mould. Further, during bitumen filling and sealing the bag can be cooled as explained above either by immersing in cold fluid or by spraying cold fluid, on the mould/bag.

The bitumen binder bag can now be handled for secondary package, stacking or for shipping.

### Semi-automatic method of bitumen packaging

A semi automatic filling machine with the features described is designed and fabricated for filling bitumen binder in polymer bags. The machine consists of bitumen storage tank having capacity 50 Kg (can also have other capacities either lower or higher), a temperature control and measurement facility, pneumatically controlled bitumen inlet valve, a non contact bitumen level sensor, bag holding fixtures and an injection nozzle having adjustable timer control. Sensing the level of the bitumen in the tank the inlet valve allows/stops the flow of bitumen in to the tank. A over flow line is also provided to remove excess bitumen from the tank in the eventuality of non-operation of the inlet valve such as non-closure when the tank is filled to the desired level. Sufficient heat insulation was provided to bitumen contact parts to reduce heat loss and smooth opening and closing of valves. The open/shut of the injection nozzle was based on timer controlled, which can be adjusted according to the quantity of the bitumen to be filled. The injection nozzle was designed to avoid spraying of bitumen and total cut of mechanism to stop the dripping of bitumen. An additional mechanism for operating the injection valve through remote foot pedal switch was provided to increase the personal safety during operations.

The bitumen storage tank is connected to the bitumen inlet line, and bitumen at 40-140°C, preferably at 70-140°C is filled in the filling machine tank of 50-250keg capacity, as the level in the tank reached desired height, the inlet valve get closed with the help of level sensor. The filling machine tank temperature is maintained the desired level. Below the injection valve a water tank of filled with water maintained below 30°C is placed. The polymer bags were fixed in the moulds as explained in manual method. The timer for injection valve is set at desired quantity. The mould was placed in cold water below the injection valve and foot pedal was operated. Preset quantity of hot molten bitumen is filled in bag and the valve got closed. The filled bag along with mould was shifted ahead inside the same water tank and kept for more than 2 minutes for cooling the bitumen to the desired temperature. In similar way filling of other bags were continued. The other operations such as removing the mould/bag, sealing etc., were carried out sequentially as explained for manual filling operations.

The weight of each packed bitumen bag/pouch can be in the range of 0.1kg to 100kg, preferably in the range of 1kg to 50kg in weight. When the pack size is small (less than 25kg), two or more bags can be packed/wrapped together (called secondary package) to produce a final pack of 50kg or more for easy handling, stacking, loading, shipping and usage.

### Secondary packaging

The secondary packaging is done for ease of handling and transportation. Secondary packaging provides additional strength. Two types of secondary packaging material are used viz., (a) removable packaging in which single layer of high density polyethylene film having thickness in the range of 150-500 µm preferably in the range of 200-300 µm or any other suitable material is used. This material does not dissolve completely in molten bitumen at the end use application and hence, this secondary package has to be removed prior to the use of bitumen for pavement or any other application. Any other suitable material can also be used for secondary packaging. (b) non removable packaging in which a suitable single, double or multilayer layered polymer film comprising of thickness of about 150-500 µm preferably 200-300 µm is used. In this case film material gets completely dissolved in hot molten bitumen during its end use and hence, there is no need for the removal of secondary packaging.

In one embodiment, a secondary packing is done using prefabricated polymer bag in a box shape of desired size by stitching, keeping a flip type opening at top. Desired number of individual primary bitumen bags is placed in the secondary bag and stitched the open end using portable stitching machine. The secondary packaging can also be done is an automatic machine. The secondary packing material is removed at the time of end use at the user site as the material does not melt or mix with bitumen at the temperature at which bitumen concrete is prepared.

However, if the secondary bag made with polymeric material such as low density polyethylene or any other polymeric material which dissolves and mixes with bitumen binder at the temperature at which bitumen concrete is prepared, the bitumen binder packed in secondary package can be directly used without removing material to the hot mixer to produce bitumen concrete at user site.

The temperature at which bitumen is converted to molten state if the polymer used for package fully melts and gets incorporated, and the polymer used in the packaging is sufficiently high i.e. more than 2wt% by weight, the bitumen obtained on melting along with the packaging material at the user site is polymer modified bitumen

(PMB). The polymer modified bitumen thus obtained possesses superior properties. The PMB thus obtained is from drawbacks such as degradation/decomposition of polymers as the material is not subjected to prolonged heating.

The packaging is suitable both for unmodified and modified bitumen binders. The various grades of bitumen binders having softening point in the range of 30-65°C can be packed. The packaging is not restricted to any particular bitumen grade but suitable for packaging any material in molten or liquid state.

Each one of the experiment described in the examples was carried out under conditions of strict confidentiality. Particularly, the trials mentioned in above examples, including manufacturing, transport worthiness, melting, hot mix preparation, road laying and other related experiments were conducted in a closed area and by maintaining confidentiality and secrecy.

Bitumen products are characterized for various properties like penetration, softening point, elastic recovery etc. following the standard tests by Bureau of Indian Standard (BIS) designated IS 1203:1978, IS 1205:1978 and IS 15462:2004 respectively. The Drop test data given in examples for the packed bitumen bag is measured by the BIS method IS-12724. Dissolution of packed bitumen bag data given in the examples is measured as described below:

Base bitumen sufficient to immerse the packed bitumen bag is melted in a suitable container by heating and maintaining at a temperature in the range of 140 to 280°C. The bag is then immersed in the above molten bitumen and the dissolution/melting of the polymeric bag in the base bitumen is observed with occasional mixing and by recording the time required for dissolution / melting of the entire polymeric material to form a homogeneous mixture.

All of the given Examples are merely for the purpose of illustration.

### Example - 1

Mould of dimensions 22" x 18" x 4" in a box shape made up of light weight perforated aluminum sheet walls was fabricated. The design of the mould was made in such a way that it has smooth surfaces and corners. The empty bag can be easily fixed in the mould, filled with hot bitumen and cooled bags are removed easily. The empty bag can be fixed in the mould with the help of clamps at top and bottom.

### Example - 2

A preformed polymer bag of dimensions 23" x 18" formed from a three layered film of thickness 150 µm, melting at 160°C and having polyethylene in the outer layers and polypropylene in the inner core in the weight ratio 1:1:1 is fixed in the mould fabricated as per described in Example 1. The mould along with the bag is immersed in a water tank maintained at 5°C temperature in such a way that about 19 inches of the bag is immersed in water. About 10kg of accurately weighed hot molten bitumen having penetration and softening point of 66 and 50°C respectively, maintained at a temperature of 110°C is poured in the bag with the help of a funnel. Bitumen is filled in the bag up to a mark of about 19". The cooling of the bitumen inside the bag was continued in the water tank for additional 12 minutes during which the bitumen temperature is reduced to 50°C. The mould along with bag is then removed from the tank. The bitumen containing bag is removed from the mould and sealed using hot seal. The bag thus prepared is dropped from a height of 4" and examined for any damage. The bag remained intact and no rupture/damage was observed. The bag is then immersed in molten bitumen in a drum maintained at 190 ± 10°C. The polymer bag with bitumen fully melted in 20min time. The bitumen product thus obtained showed penetration and softening point 64 and 51°C respectively.

### Example - 3

A multi layered polymer film of polyethylene in outer layers and polypropylene in inner core having a melting point of 160°C, and film thickness of 100 µm is taken and a bag of dimensions 9" x 12" is formed by sealing three sides of the film. The bag thus formed is fixed in a mould of suitable size fabricated as described in Example 1. The mould with empty bag is immersed in cold water maintained at temperature of 7°C and a pre-weighed (500 gms) hot molten bitumen having softening point of 50°C, at a temperature of about 115°C is poured into the above bag. The filled bag is left inside the cold water for about 5 minutes and then removed, sealed and stacked.

### Example - 4

A polymer bag of 28" x 22" dimensions is formed from a three layered polymer film of polypropylene in outer layers and polyethylene in inner core in the weight ratio 1:2:1 and having a melting point of 175°C. The bag thus formed is fixed in the mould of suitable size fabricated as described in Example 1 and immersed in cold water maintained at temperature of 5°C. Pre-weighed hot molten bitumen of 30kg at a temperature of 110°C having softening point of 48°C and penetration of 68 is poured into the above bag. The filled bag is left inside the cold water for about 15 minutes and then removed and sealed. The bag thus formed could be fully melted. Polymeric material used for packaging the bitumen is fully dissolved in molten bitumen at 200°C.

### Example - 5

A multi layered polymer film of polyethylene and polypropylene having characteristics as mentioned in Example 2 and having film thickness of 250 µm is used to form a bag. The bag is then fixed in the a mould of suitable size fabricated as described in Example 1 and immersed in cold water maintained at temperature of 3°C. Pre-weighed (10Kg) quantity of hot molten bitumen having penetration of 65, at a temperature of about 110°C is poured into the above bag. The filled bag is left inside the cold water for about 10 minutes and then removed, sealed and stacked. The bag thus formed was dropped from a height of 6 feet. No damage to the bag was observed. The bag with bitumen could be fully melted at 190°C and brought to molten state.

### Example - 6

A pillow shaped bag is formed by cutting and sealing a three layered polymer film having melting point of 145°C in dimensions of 18" x 23". The bag thus formed is fixed in a mould and immersed in a water tank maintained at a temperature of about 5°C. Pre-weighed (10KG) of hot molten bitumen was poured into the bag from the top opening with the help of a funnel. The bag filled with bitumen is continued in cold water till the temperature of bitumen in the bag dropped to less than 50°C. The mould is then removed from the water bath and the bag is sealed from top.

### Example - 7

A three layered polymer film of polyethylene in outer layers and polypropylene in inner core in the weight ratio 1:1:1 having a melting point of 210°C, and having film thickness of about 90 µm is taken and a bag is formed as per the procedure mentioned in Example 2. Filling of hot molten bitumen of a quantity of 10KG having softening point of 50°C and penetration of 60/70 is performed as per the procedure mentioned in Example 2. The filled bag is left inside the cold water for about 15 minutes cooling and then removed and sealed.

### Example - 8

A two-layered polymer film of thickness 150 µm made from polyethylene and polypropylene in weight ratio of 1:1 and melting point of 130°C is used to make a bag. About 1kg of accurately weighed bitumen having penetration and softening point of 100 and 45°C respectively and maintained at a temperature of 85°C is poured in the bag with the help of a funnel. The bag along with bitumen was cooled for another 5 minutes to reduce the bitumen temperature to 50°C. The mould along with bag was then removed from the tank and sealed. The bag thus formed could be fully melted. Polymeric material used for packaging the bitumen is fully dissolved in molten bitumen at 200°C.

### Example - 9

A bag is formed using single layered polymer film made from polyethylene having film thickness of 90 µm. Hot bitumen at 120°C could not be filled in the bag thus formed as the bag got punctured during filling.

### Example - 10

A polymer bag is prepared from a nylon film 100 µm of thick. Hot molten bitumen of quantity 10 KG is filled and sealed as described in Example 2. The bag when heated at 180°C did not fully melt. However, on further heating it was found that the bag along with bitumen could be fully melted at 265°C.

### Example - 11

A preformed polymer bag of dimensions 23" x 18" formed from a three layered film of thickness 150 µm, melting at 160°C and having polyethylene in the outer layers and polypropylene in the inner core is fixed in the mould fabricated as described in Example 1. The mould along with the empty bag is immersed in a water tank maintained at a temperature of about 5°C. 10kg of Polymer Modified Bitumen (PMB), having softening point of 60°C and elastic recovery of 70 percent, maintained at 120°C is poured in the bag with the help of a funnel. The cooling of the bitumen inside the bag was continued in the water tank for 10 minutes to reduce the bag temperature to 50°C. The mould along with bag is then removed from the tank and sealed. The bag thus prepared is dropped from a height of 4" and examined for any damage. The bag remained intact and no rupture/damage was observed. The bag is then immersed in molten PMB in a drum maintained at 190 ± 10°C. The polymer bag with bitumen fully melted in 20min time. The product thus obtained did not show any change in the softening point and elastic recovery.

### Example - 12

A bag is formed from a multi layered polymer film of polyethylene and polypropylene having characteristics and dimensions as mentioned in Example 2. This bag is then fixed in the mould fabricated as described in Example 1. The mould along with the bag is immersed in a water tank maintained at 5°C temperature in such a way that about 19 inches of the bag is immersed in water. About 10kg of accurately weighed hot molten PMB having softening point of 55°C and elastic recovery of 40 percent is filled, cooled and sealed. Polymeric material used for packaging the bitumen is fully dissolved in molten bitumen at 200°C. The product thus obtained did not show any change in the softening point and elastic recovery.

### Example - 13

For easily handling of bitumen packed polymer bags, a secondary packaging is provided as described below:

A two layer polymer film made from low density polyethylene and high density polyethylene melting above 250°C and having thickness of 400 µm is used to fabricated bags in box shape having dimensions 22" x 18" x 12" closed on all sides keeping flip type opening at top. For easy handling of the bags handles are also provided on either side along the length of the bag. The bag thus formed is hereinafter called a secondary bag. Five numbers of individual bitumen packed bags of 10 KG capacity prepared as described in Example 2 are placed in the secondary bag and the open end is closed by using a stitching. 500 numbers of such secondary bags are packed and subjected to the loading and unloading operations. The polymeric material, design and dimensions of secondary bags are convenient to handle and also sturdy enough to take the load of 50KG. Further these secondary bags are stacked up to a height of 8" one above other for 24 hrs to observe any damage of outer secondary bag and inside individual bags. No damage on the sealing area, bursting of bags is observed during handling, stacking and storage.

As the polymeric material used for making secondary bags does not dissolve completely at the end use application temperature, it is to be removed prior to the use of bitumen.

### Example - 14

A multilayer layered polymer film described in Example 2 having film thickness of 250 µm is used for making secondary bags as described below.

A prefabricated bag is formed in a box shape of dimensions 20" x 15" x 4" closed on all sides, keeping a flip type opening at the top. Three numbers of individual bitumen bags of 10 KG capacity each prepared as described in Example 2 are placed in the secondary bag and sealed. 100 numbers of secondary bags thus prepared are heated in a container maintained at a temperature of 180±10°C. Bag along with bitumen melted and the polymer bag material completely dissolved. The molten bitumen thus obtained contained 5 wt% of polymeric material. The resultant bitumen product showed significant improvement in softening point, penetration and elastic recovery. The penetration reduced from 64 to 35, softening point increased from 50°C to 78°C and elastic recovery increased to 38%.

### Example 15

Four numbers of individual bitumen bags of 10 KG capacity each prepared as described in Example 2 are wrapped together with the help of a three layered polymer film of thickness 50 µm. The effect of polymeric content on bitumen quality is studied by adjusting the weight content of the entire polymeric packaging material to 3 % of the packed bitumen quantity. The bag thus formed could be fully melted. Polymeric material used for both primary and secondary packaging is fully dissolved in molten bitumen at 200°C. The resultant bitumen showed an improvement in penetration and softening point to 64.2 and 51.5°C as against 65 and 50°C respectively.

### Example - 16

Packaging of 11MT bitumen in primary polymeric bags of capacity 10KG each (total 1100 nos.) is done as described in Example 2 however the filling activity is carried out using a semi-automatic filling machine. The primary bags thus formed are packed in secondary bags of capacity 50KG each (total 220 nos.) as described in Example 13.

### Bitumen Bag Endurance in Transit:-

Transport worthiness study of bitumen bags is completed by transporting the entire 11MT poly packed bitumen by road over more than 600 KMS, it is observed that there is no damage, spillage of bitumen from the bags. The packaging material (individual and secondary as well) is strong enough to undertake the road transportation conditions such as weather, handling, loading and unloading, etc. Further it is observed that the stacking of the bitumen secondary bags required less space as compared to conventionally packed bitumen. An increased quantity of bitumen bags can be transported at one time compared to drum packed bitumen. Bitumen bag is also fully resistant to extreme humid environmental condition vis-à-vis commonly faced problem of rusting of metallic drum packed bitumen.

### Miscibility of Bitumen Bag While Heating / Melting at End Application:-

Melting / dissolution of 11 MT packed bitumen bags is conducted in a commercial scale Hot Mix Plant (bitumen tank having about 50% of molten bulk bitumen, maintained at a temperature range of about 180-200°C). It is observed that the polymer film material got dissolved / mixed with the bitumen completely and easily in the existing set-up without any modifications and damage. The molten bitumen behaved exactly in similar way as of bulk bitumen and no operational difficulties could be encountered as against the use of bulk bitumen in Hot Mix Plant.

### Road Laying Using Poly Bag Packed bitumen:-

The hot molten bitumen obtained from the example described above is then spray mixed with aggregate to form bitumen concrete as per the required ratio. This bitumen concrete is then tested for Marshall Stability (as per ASTM D1559). A higher Marshall strength of 15Nm² is observed for polymer bag packed bitumen as compared to bulk bitumen of 12 Nm² and during this no operational differences encountered as compared with the road lying using bitumen concrete prepared from bulk / drum packed bitumen.

## Claims

1. A mould for packing bitumen in a multi-layer polymer encasement, the mould comprising a bottom wall (8) and a pair of side walls (1,2) mounted on said bottom wall (8), **characterised in that** the side walls (1,2) are mounted so that at least one of the side walls (1,2) opens outwardly, away from the other in an open position and so that they stand vertically, parallel to each other in a closed position, thereby providing a space there between for positioning a bag to be filled and packed with bitumen, the mould further comprising locking means (3,4) located on the top of at least one side wall (2) so that the side walls (1,2) are maintained in a locked position while the bag is being filled with bitumen.

2. A mould as claimed in claim 1, wherein the side walls (1,2) are perforated.

3. A mould as claimed in claim 1 or 2 wherein both the side walls (1,2) are hingedly mounted (5,6,7) on said bottom wall (8).

4. A mould as claimed in claim 1 wherein one side wall (2) is hingedly mounted on said bottom wall (8) while the other side wall (1) is fixedly mounted on said bottom wall (8).

5. A mould as claimed in any one claims 1 to 4 wherein the locking means (3,4) comprise a hook and eye mechanism.

6. A mould according to any preceding claim, wherein the mould is for a bitumen package comprising of paving bitumen binder having a softening point in the range of 30-65°C enclosed within a multilayered polymer film encasement consisting of at least three layers, the multilayer polymer encasement forming from 0.5 to 10 wt% of the total package, the remaining being paving bitumen binder, said multilayer polymer encasement melting at a temperature in the range of 140 to 280°C, each layer being a thin flexible continuous self-sustaining polymer film, such that upon melting, the polymer becomes homogeneous with the paving bitumen binder contained therein and gets incorporated with the binder and improves its properties significantly.

7. A mould according to any preceding claim, wherein the mould is for a package as claimed in Claim 6, wherein the multilayer polymer encasement melts in the temperature range of 150 to 200°C.

8. A mould according to any preceding claim, wherein the mould is for a package as claimed in Claim 6, whecein the multilayered encasement is a three layered polymer bag, all the layers being polyethylene or polypropylene or nylon.

9. A mould according to any preceding claim, wherein the mould is for use in a method for packaging paving bitumen which comprises filling bitumen binder having a softening point in the rage of 30-65°C, in a multilayered polymer encasement consisting of at least three layers, which encasement melts at a temperature in the range of 140 to 280 °C, each layer being a thin flexible continuous self-sustaining polymer film, upon melting the polymer becomes homogeneous with the paving bitumen binder contained therein.

10. A mould according to any preceding claim, wherein the mould is for use in a method as claimed in Claim 9, wherein the multilayered polymer encasement is a preformed bag sealed from all sides except from top into which hot molten bitumen is filled and heat sealed at the top.

11. A mould according to any preceding claim, wherein the mould is for use in a method as claimed in Claim 10, wherein the polymer encasement is supported by the perforated metal mould during filling and cooling.

12. A mould according to any preceding claim, wherein the mould is used in a method as claimed in Claim 9, wherein the polymer encasement forms more than 2 wt % of the total package and upon melting, the polymer becomes homogenous, gets incorporated with paying bitumen binder and improves the properties of the binder.

13. A mould according to any preceding claim, wherein the mould is configured for a bitumen package according to any of claims 6 to 8, wherein the multi-layer polymer encasement is covered by a secondary encasement which is made of a material which upon melting becomes homogeneous with the paving bitumen binder contained therein.

## Patentansprüche

1. Form zum Verpacken von Bitumen in einer mehrlagigen Polymerverkleidung, wobei die Form einen Boden (8) und ein Paar Seitenwände (1,2), die an dem Boden (8) befestigt sind, umfasst, **dadurch gekennzeichnet, dass** die Seitenwände (1,2) derart befestigt sind, dass mindestens eine der Seitenwände (1,2) in einer offenen Position sich nach außen hin öffnet, weg von der anderen und dass sie in einer geschlossenen Position vertikal, parallel zueinander stehen, wodurch ein Raum dazwischen zur Positionierung eines mit Bitumen zu füllenden und verpackenden Beutels bereitgestellt wird, wobei die Form ferner Verschlussmittel (3,4) umfasst, die am oberen Ende mindestens einer Seitenwand (2) gelegen sind, sodass die Seitenwände (1,2) in einer geschlossenen Position bleiben, während der Beutel mit Bitumen gefüllt wird.

2. Form nach Anspruch 1, wobei die Seitenwände (1,2) perforiert sind.

3. Form nach Anspruch 1 oder 2, wobei beide Seitenwände (1,2) schwenkbar an dem Boden (8) befestigt sind (5,6,7).

4. Form nach Anspruch 1, wobei eine Seitenwand (2) schwenkbar an dem Boden (8) befestigt ist, während die andere Seitenwand (1) fest an dem Boden (8) befestigt ist.

5. Form nach einem der Ansprüche 1 bis 4, wobei die Verschlussmittel (3,4) einen Haken-und-Öse-Mechanismus aufweisen.

6. Form nach einem der vorhergehenden Ansprüche, wobei die Form für ein Bitumengebinde ist, umfassend ein Straßenbelagsbitumenbindemittel mit einem Erweichungspunkt im Bereich von 30 bis 65°C, eingeschlossen innerhalb einer mehrlagigen Polymerfilmverkleidung, bestehend aus mindestens drei Lagen, wobei die mehrlagige Polymerverkleidung 0,5 bis 10 Gew.-% des gesamten Gebindes ausmacht, wobei der Rest Straßenbelagsbitumenbindemittel ist, wobei die mehrlagige Polymerverkleidung bei einer Temperatur im Bereich von 140 bis 280°C schmilzt, wobei jede Lage ein dünner, flexibler, kontinuierlicher, selbstversorgender Polymerfilm ist, sodass beim Schmelzen das Polymer homogen mit dem darin enthaltenen Straßenbelagsbitumenbindemittel wird und in den Binder eingebaut wird und dessen Eigenschaften deutlich verbessert.

7. Form nach einem der vorhergehenden Ansprüche, wobei die Form für ein Gebinde, wie in Anspruch 6 beansprucht, ist, wobei die mehrlagige Polymerverkleidung im Temperaturbereich von 150 bis 200°C schmilzt.

8. Form nach einem der vorhergehenden Ansprüche, wobei die Form für ein Gebinde, wie in Anspruch 6 beansprucht, ist, wobei die mehrlagige Verkleidung ein dreilagiger Polymerbeutel ist, wobei alle Lagen aus Polyethylen oder Polypropylen oder Nylon sind.

9. Form nach einem der vorhergehenden Ansprüche, wobei die Form zur Verwendung in einem Verfahren zum Verpacken von Straßenbelagsbitumen ist, wobei das Verfahren das Füllen von Bitumenbindemittel mit einem Erweichungspunkt im Bereich von 30 bis 65°C in eine mehrlagige Polymerverkleidung, bestehend aus mindestens drei Lagen, wobei die Verkleidung bei einer Temperatur im Bereich von 140 bis 280°C schmilzt, wobei jede Lage ein dünner, flexibler, kontinuierlicher, selbstversorgender Polymerfilm ist, wobei beim Schmelzen das Polymer mit dem darin enthaltenen Straßenbelagsbitumenbindemittel homogen wird, umfasst.

10. Form nach einem der vorhergehenden Ansprüche, wobei die Form zur Verwendung in einem Verfahren, wie in Anspruch 9 beansprucht, ist, wobei die mehrlagige Polymerverkleidung ein vorgefertigter Beutel ist, der von allen Seiten verschlossen ist mit Ausnahme des oberen Endes, in das heißes, geschmolzenes Bitumen gefüllt wird und am oberen Ende wärmeversiegelt wird.

11. Form nach einem der vorhergehenden Ansprüche, wobei die Form zur Verwendung in einem Verfahren, wie in Anspruch 10 beansprucht, ist, wobei die Polymerverkleidung durch die perforierte Metallform während des Füllens und Abkühlens unterstützt wird.

12. Form nach einem der vorhergehenden Ansprüche, wobei die Form in einem Verfahren, wie in Anspruch 9 beansprucht, verwendet wird, wobei die Polymerverkleidung mehr als 2 Gew.-% des Gesamtgebindes ausmacht und beim Schmelzen das Polymer homogen wird, in das Straßenbelagsbitumenbindemittel eingebaut wird und die Eigenschaften des Bindemittels verbessert.

13. Form nach einem der vorhergehenden Ansprüche, wobei die Form für ein Bitumengebinde nach einem der Ansprüche 6 bis 8 gestaltet ist, wobei die mehrlagige Polymerverkleidung durch eine zweite Verkleidung umhüllt ist, die aus einem Material, das beim Schmelzen mit dem darin enthaltenen Straßenbelagsbitumenbindemittel homogen wird, gemacht ist.

## Revendications

1. Moule pour conditionner du bitume dans une enveloppe polymère multicouche, le moule comprenant une paroi inférieure (8) et une paire de parois latérales (1, 2) montées sur ladite paroi inférieure (8), **caractérisé en ce que** les parois latérales (1, 2) sont montées de sorte qu'au moins l'une des parois latérales (1, 2) s'ouvre vers l'extérieur, en éloignement de l'autre dans une position ouverte et de sorte qu'elles se positionnent verticalement, parallèles l'une à l'autre dans une position fermée, formant ainsi un espace entre elles pour positionner un sac à remplir et garnir de bitume, le moule comprenant en outre des moyens de blocage (3, 4) situés au sommet d'au moins une paroi latérale (2) de sorte que les parois latérales (1, 2) sont maintenues dans une position bloquée pendant que le sac est rempli de bitume.

2. Moule selon la revendication 1, dans lequel les parois latérales (1, 2) sont perforées.

3. Moule selon la revendication 1 ou 2, dans lequel les deux parois latérales (1, 2) sont montées (5, 6, 7) par charnière sur ladite paroi inférieure (8).

4. Moule selon la revendication 1, dans lequel une paroi latérale (2) est montée par charnière sur ladite paroi inférieure (8) tandis que l'autre paroi latérale (1) est montée fixement sur ladite paroi inférieure (8).

5. Moule selon l'une quelconque des revendications 1 à 4, dans lequel les moyens de blocage (3, 4) comprennent un mécanisme d'agrafe.

6. Moule selon l'une quelconque des revendications précédentes, dans lequel le moule est destiné à une garniture de bitume comprenant un liant pour bitume de pavage ayant un point de ramollissement dans la gamme de 30 à 65 °C enfermé dans une enveloppe de film polymère multicouche constituée d'au moins trois couches, l'enveloppe polymère multicouche formant de 0,5 à 10 % en poids de la garniture totale, le reste étant le liant pour bitume de pavage, ladite enveloppe polymère multicouche fondant à une température dans la gamme de 140 à 280 °C, chaque couche étant un film polymère auto-porteur continu flexible fin de telle sorte que lors de la fusion, le polymère devient homogène avec le liant pour bitume de pavage contenu à l'intérieur et s'incorpore avec le liant et améliore significativement ses propriétés.

7. Moule selon l'une quelconque des revendications précédentes, dans lequel le moule est destiné à une garniture telle que revendiquée dans la revendication 6, où l'enveloppe polymère multicouche fond dans la gamme de température de 150 à 200 °C.

8. Moule selon l'une quelconque des revendications précédentes, dans lequel le moule est destiné à une garniture telle que revendiquée dans la revendication 6, où l'enveloppe multicouche est un sac polymère à trois couches, toutes les couches étant en polyéthylène ou polypropylène ou nylon.

9. Moule selon l'une quelconque des revendications précédentes, dans lequel le moule est à utiliser dans un procédé de garniture de bitume de pavage qui comprend le remplissage d'un liant pour bitume ayant un point de ramollissement dans la gamme de 30 à 65 °C, dans une enveloppe polymère multicouche constituée d'au moins trois couches, laquelle enveloppe fond à une température dans la gamme de 140 à 280 °C, chaque couche étant un film polymère auto-porteur continu flexible fin, lors de la fusion, le polymère devient homogène avec le liant pour bitume de pavage contenu à l'intérieur.

10. Moule selon l'une quelconque des revendications précédentes, dans lequel le moule est à utiliser dans un procédé tel que revendiqué dans la revendication 9, dans lequel l'enveloppe polymère multicouche est un sac préformé scellé de tous les côtés à l'exception du sommet dans lequel du bitume fondu chaud est chargé et thermoscellé au sommet.

11. Moule selon l'une quelconque des revendications précédentes, dans lequel le moule est à utiliser dans un procédé tel que revendiqué dans la revendication 10, dans lequel l'enveloppe polymère est supportée par le moule en métal perforé pendant le remplissage et le refroidissement.

12. Moule selon l'une quelconque des revendications précédentes, dans lequel le moule est utilisé dans un procédé tel que revendiqué dans la revendication 9, dans lequel l'enveloppe polymère forme plus de 2 % en poids de la garniture totale et lors de la fusion, le polymère devient homogène, s'incorpore avec le liant pour bitume de pavage et améliore les propriétés du liant.

13. Moule selon l'une quelconque des revendications précédentes, dans lequel le moule est configuré pour une garniture de bitume selon l'une quelconque des revendications 6 à 8, dans lequel l'enveloppe polymère multicouche est recouverte par une enveloppe secondaire qui est constituée d'un matériau qui, lors de la fusion, devient homogène avec le liant pour bitume de pavage contenu à l'intérieur.
